# EUROPEAN PATENT SPECIFICATION

(11) **EP 4 376 555 B1**
(45) Date of publication and mention of the grant of the patent: **14.10.2026**
(21) Application number: 22208855.1
(22) Date of filing: 22.11.2022
(51) Int. Cl.: H05B 47/115

(54) **LIGHTING CONTROL**
BELEUCHTUNGSSTEUERUNG
COMMANDE D'ÉCLAIRAGE

(43) Date of publication of application: 29.05.2024
(73) Proprietor: Helvar Oy Ab, 02150 Espoo (FI)
(72) Inventor: JUSLÉN, Henri, 02150 Espoo (FI); TANTTU, Mika, 02150 Espoo (FI)
(74) Representative: Berggren Oy

(56) References cited:
- US-A1- 2014 139 116
- US-A1- 2015 195 883
- US-A1- 2017 127 496
- US-A1- 2020 187 336
- US-B1- 10 609 785

## Description

### TECHNICAL FIELD

The present invention relates to control of a lighting system based on environmental data captured at a space or area illuminated by the lighting system.

### BACKGROUND

Many lighting systems applied for illuminating an indoor space and/or an outdoor space at least partially rely on autonomous control of light output of luminaries illuminating of the lighting system based on environmental characteristics determined via usage of one or more sensors provided in the illuminated space. Typical, but non-limiting, examples of sensors applicable for capturing control data for controlling the light output include an occupancy sensor and a light sensor: while an occupancy sensor may be applied to switch on (and keep on) lights in response to detecting occupancy in the space and to switch off (and keep off) lights in response to detecting non-occupancy in the space, a light sensor may be applied to control the light output in view of the ambient light in the space such that a desired overall light level is provided. Hence, usage of occupancy sensors and light sensors enable at least partially autonomous lighting control that ensures user comfort while minimizing energy consumption.

As an example for implementing such autonomous aspect of lighting control, the illuminated space may be provided with one or more sensor units that report respective sensor data captured therein over a lighting control network to a control entity, which makes use of the sensor data to control at least some aspects of respective light outputs of luminaires applied for illuminating the space e.g. via issuing lighting control commands to the respective luminaries over the lighting control network, whereas in another example luminaires applied for illuminating the space may be provided with respective sensor units and each luminaire may apply the sensor data captured locally by the sensor unit provided therein to control at least some aspects of its light output. Also in the latter scenario at least part of the sensor data captured at the sensor units provided at the luminaires may be shared with other entities coupled to the lighting control network.

In addition to or instead of the occupancy sensors and light sensors described above, the sensor units may include one or more sensor of other type that are arranged for monitoring environmental characteristics such as temperature, humidity, carbon dioxide (CO₂) level, etc. and this data may be likewise shared with other entities coupled to the lighting control network. Such sensor data may be likewise applicable for assisting control of light output of the luminaires of the lighting system and/or for assisting control of building automation systems such as heating, ventilation and air-conditioning (HVAC) systems. However, while already exploited to some extent, availability of the sensor data that is descriptive of environmental conditions in the space via entities of the lighting control network provides interesting possibilities for making further use of such information to enable enhanced lighting control.

In related art, US 2017/127496 A1 discloses a method for managing light settings of a luminaire communicatively connected to a local coordinator. The method, performed by the luminaire, includes steps of providing to the local coordinator a control state of the luminaire (e.g. occupancy status), receiving from the local coordinator a power reduction factor for the luminaire, the factor being based on the control state of the luminaire and on control states provided to the local coordinator by one or more additional luminaires, determining new illuminance settings for the luminaire by applying the received factor to current illuminance settings, measuring luminance within a sensing region of a light sensor of the luminaire while one or more light sources of the luminaire emit light according to one or more operating parameters, and, based on the measured luminance, adjusting the operating parameters to achieve the new illuminance settings.

### SUMMARY

It is an object of the present invention to provide a lighting control approach that is at least partially based on environmental characteristics in an illuminated space and that enables energy-efficient of a lighting system without compromising user comfort in the illuminated space.

According to an example embodiment, a method for lighting control in a lighting system comprising a plurality of luminaires for illuminating a space, the plurality of luminaires including a first luminaire arranged for illuminating a first location of said space and one or more second luminaires that are associated with the first luminaire and arranged for illuminating respective second locations of said space is provided, the method comprising: controlling the first luminaire to provide light output at a first light intensity in response to detecting occupancy at said first location, wherein the first light intensity is set such that it results in providing at least a first reference light level at said first location; controlling the one or more second luminaires to activate their respective light outputs in response to obtaining an indication of the first luminaire having activated its light output while not detecting occupancy at the respective second locations; controlling, while not detecting occupancy at the respective second location, the respective second luminaire to provide light output at a respective second light intensity, wherein the respective second light intensity is set such that it results in providing at least a second reference light level at the respective second location, where the second reference light level is lower than the first reference light level; and adjusting the second reference light level for the respective second luminaire in dependence of one or more environmental characteristics in said space, wherein the method comprises keeping the first reference light level for the first luminaire unchanged and said adjusting comprises adjusting the second reference light level for the respective second luminaire such that a margin between the first and second reference light levels is changed in dependence of the one or more environmental characteristics at the respective second location.

According to another example embodiment, a lighting system is provided, the lighting system comprising a plurality of luminaires for illuminating a space and one or more control entities for controlling respective light output of said plurality of luminaires, the plurality of luminaires including a first luminaire arranged for illuminating a first location of said space and one or more second luminaires that are associated with the first luminaire and arranged for illuminating respective second locations of said space, wherein the one or more control entities are arranged to: control the first luminaire (120-m) to provide light output at a first light intensity in response to detecting occupancy at said first location, wherein the first light intensity is set such that it results in providing at least a first reference light level at said first location; control the one or more second luminaires to activate their respective light outputs in response to obtaining an indication of the first luminaire having activated its light output while not detecting occupancy at the respective second locations; control, while not detecting occupancy at the respective second location, the respective second luminaire to provide light output at a second light intensity, wherein the respective second light intensity is set such that it results in providing at least a second reference light level at the respective second location, where the second reference light level is that is lower than the first reference light level; and adjusting the second reference light level for the respective second luminaire in dependence of one or more environmental characteristics in said space, wherein the one or more control entities are arranged to keep the first reference light for the first luminaire unchanged and adjust the second reference light level for the respective second luminaire such that a margin between the first and second reference light levels is changed in dependence of the one or more environmental characteristics at the respective second location.

According to a further example, a computer program is provided, the computer program comprising computer readable program code configured to cause performing at least a method according to an example embodiment described in the foregoing when said program code is executed on one or more computing apparatuses.

The computer program according to the above-described example may be embodied on a volatile or a non-volatile computer-readable record medium, for example as a computer program product comprising at least one computer readable non-transitory medium having the program code stored thereon, which, when executed by one or more computing apparatuses, causes the one or more computing apparatuses at least to perform the method according to the example embodiment described in the foregoing.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described in the following examples may be used in combinations other than those explicitly described, unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 illustrates a block diagram of some logical components of a lighting system according to an example;
Figure 2 illustrates a block diagram of some components of a luminaire according to an example;
Figure 3 illustrates a method according to an example; and
Figure 4 illustrates a block diagram of some components of an apparatus according to an example.

### DESCRIPTION OF SOME EMBODIMENTS

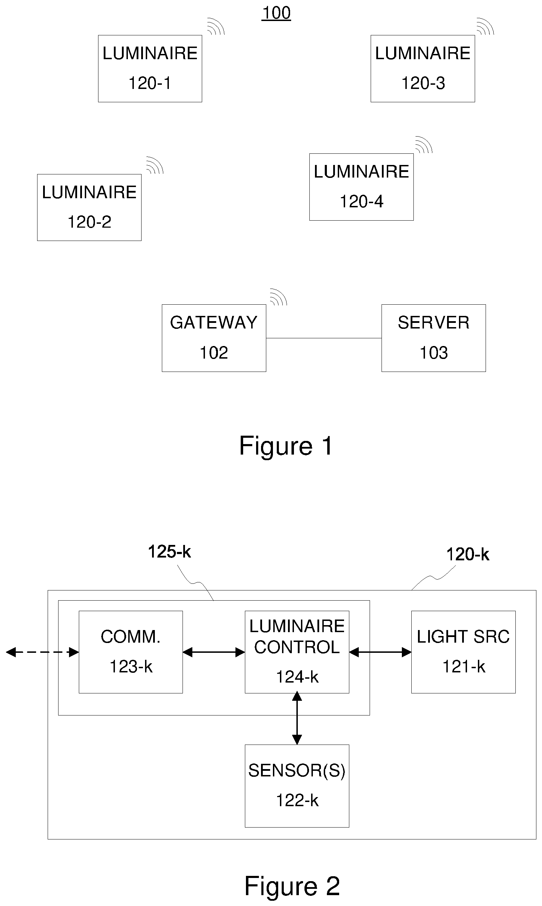

Figure 1 illustrates a block diagram of some logical elements of a lighting system 100 according to an example. In the example of Figure 1 the lighting system 100 is shown with luminaires 120-1, 120-2, 120-3 and 120-4 for illuminating a space or area. The luminaires 120-1 to 120-4 represent one or more luminaires 120, whereas any individual luminaire may be referred to via a reference number 120-k. The lighting system 100 may be arranged for illuminating a space or area, which may comprise e.g. one or more indoor spaces or areas and/or one or more outdoor areas. The plurality of luminaires 120 may be communicatively coupled to each other via a wireless communication network or via respective wireless communication links using a suitable wireless communication technique known in the art, each of the plurality of luminaires 120 hence serving as a respective node of a lighting control network.

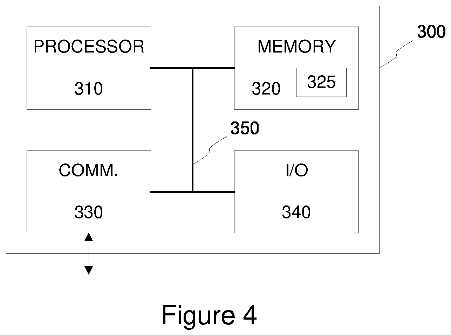

The example of Figure 1 further illustrates a lighting system gateway 102 and a lighting system server 103. The lighting gateway 102 may be communicatively coupled to the plurality of luminaires 120, the lighting system gateway 102 hence constituting a node of the lighting control network. The lighting system gateway 102 may be communicatively coupled to the lighting system server 103, where the communitive coupling between these two entities may be provided via a communication network such as the Internet. Hence, the lighting control network may be communicatively coupled to the lighting system server 103 via the lighting system gateway 102. Each of the lighting system gateway 102 and the lighting system server 103 is to be construed as a respective logical entity that may be implemented by one or more computer apparatuses. As an example, the lighting control gateway 102 may be implemented by a single computer apparatus and/or the lighting control server 103 may be implemented by one or more computer apparatuses that may be arranged to provide a cloud computing service. In this regard, each computer apparatus involved may comprise a processor and a memory, where the memory is arranged to store computer program code that, when executed by the processor, implements (at least a portion of) operation of the respective one of the lighting system gateway 102 or the lighting system server 103. More detailed examples in this regard are described later in this text with references to Figure 4.

It is worth noting that the example of Figure 1 serves to illustrate the plurality of luminaires 120, the lighting system gateway 102 and the lighting system server 103 as respective functional elements of the lighting system 100, while on the other hand the illustration of Figure 1 does not serve to illustrate any physical characteristics of these elements of the lighting system 100 and/or any aspects of spatial relationship between these elements of the lighting system 100. The lighting system 100 may include one or more further elements in addition to those illustrated in the example of Figure 1, e.g. one or more further luminaires and/or one or more further control entities, which may be likewise coupled to plurality of luminaries 120 and to each other via the lighting control network.

In the following, some characteristic of structure and operation of any of the plurality of luminaires 120 are described via references to the single luminaire 120-k, whereas these characteristics pertain to each of the plurality of luminaries 120, unless explicitly described otherwise. Moreover, certain characteristic of structure and operation of the luminaire 120-k are described herein for completeness of the description, whereas details of luminaire characteristics and operation are outside the scope of the present invention. In this regard, Figure 2 illustrates a block diagram of some elements of a luminaire 120-k according to an example, where the luminaire 120-k comprises at least one light source 121-k for providing light output of the luminaire 120-k, a sensor portion 122-k and a lighting control apparatus 125-k. The sensor portion 122-k may comprise one or more sensors for observing one or more environmental characteristics at the location of the space or area illuminated by the luminaire 120-k, whereas the lighting control apparatus 125-k may comprise a communication portion 123-k for wireless communication with other entities e.g. over the lighting control network and a luminaire control portion 124-k for controlling the light output of the luminaire 120-k at least partially based on sensor data obtained from the one or more sensors of the sensor portion 123-k.

According to an example, the at least one light source 121-k may comprise one or more light emitting diodes (LEDs) and the luminaire control portion 124-k may comprise or it may be provided as a LED driver device, whereas in another non-limiting example the at least one light source 121-k may comprise one or more fluorescent lamps and the luminaire control portion 124-k may comprise or it may be provided as an electronic ballast. According to an example, the lighting control apparatus 125-k may comprise a processor and a memory, where the memory is arranged to store computer program code that, when executed by the processor, implements operation of the luminaire control portion 124-k according to the present disclosure. More detailed examples in this regard are described later in this text with references to Figure 4.

The luminaire 120-k or an element thereof may have a device ID, e.g. an address, a serial number, a name, etc. assigned thereto, where the device ID assigned to the luminaire 120-k may be referred to as a luminaire ID of the luminaire 120-k. The luminaire ID may be stored, for example, in the memory provided in the luminaire 120-k (e.g. in the memory provided at the lighting control apparatus 125-k) and the luminaire ID may be applied, for example, to identify the respective luminaire 120-k in communication between elements of the lighting control network.

Along the lines described in the foregoing, the communication portion 123-k may enable wireless communication with other elements of the lighting control network. In this regard, the communication portion 123-k may comprise a respective communication apparatus, e.g. a wireless transceiver, that is capable of communicating with respective communication apparatuses provided in other elements of the lighting control network using one or more predefined wireless communication techniques or protocols. The wireless communication may be carried out via using a suitable short-range wireless communication technique known in the art that enables communication over ranges from a few meters up to a few hundred meters. Examples of suitable short-range wireless communication techniques include Bluetooth, Bluetooth Low-Energy (BLE), ZigBee, WLAN/Wi-Fi according to an IEEE 802.11 family of standards, etc. The choice of the wireless communication technique and network topology applied for a specific implementation of the lighting control network may depend e.g. on the required communication range and/or requirements with respect to energy-efficiency of the communication apparatuses.

The sensor portion 122-k may comprise one or more sensors arranged to observe respective environmental characteristics in the space or area illuminated by the luminaire 120-k. The one or more sensors of the sensor portion 122-k may be communicatively coupled, e.g. via respective electrical wires, to the luminaire control portion 124-k in order to provide respective sensor signals thereto. The one or more sensors of the sensor portion 122-k may comprise respective sensors of different type, e.g. one or more of the following sensors:
- a motion sensor for monitoring occupancy in the space or area illuminated by the luminaire 120-k, e.g. a passive infrared (PIR) sensor, a microwave radar, a lidar, a video camera, a thermal camera, etc.;
- a light sensor for measuring ambient light level in the space or area illuminated by the luminaire 120-k, e.g. photodetector such as photodiode;
- a temperature sensor for measuring ambient temperature in the space or are illuminated by the luminaire 120-k;
- a humidity sensor for measuring air humidity in the space or area illuminated by the luminaire 120-k;
- a sound sensor (e.g. a microphone or a microphone array) for capturing sounds in the space or area illuminated by the luminaire 120-k;
- a carbon dioxide (CO₂) sensor for measuring a CO₂ level in the space or area illuminated by the luminaire 120-k;
- a volatile organic compound (VOC) sensor for measuring respective levels of one or more VOCs in the space or area illuminated by the luminaire 120-k.

In the course of its operation, the luminaire control portion 124-k may record or derive respective sensor indications based on respective sensor signals received from the sensor portion 122-k, which may be referred to as respective local sensor indications since they are based on sensor data captured locally at the luminaire 120-k, whereas the local sensor indications recorded or derived at the luminaire 120-k may be jointly referred to as local sensor data. Non-limiting examples in this regard include deriving local occupancy state indications (i.e. respective indications of one of occupancy or non-occupancy) based on a motion sensor signal received from a motion sensor of the sensor portion 122-k, recording or deriving local light level indications based on a light sensor signal received from the sensor portion 122-k, deriving one or more local sound parameters (e.g. ones that are descriptive of sound level in the space) based on a sound sensor signal received from the sound sensor of the sensor portion 122-k, recording or deriving local CO₂ level indications based on a CO₂ sensor signal received from a CO₂ sensor of the sensor portion 122-k, etc.

The luminaire control portion 124- j may store at least part of the local sensor indications into the memory provided in the luminaire 120-k (e.g. in the memory provided at the lighting control apparatus 125-k) for subsequent use. In this regard, the luminaire control portion 124-k may arrange the local sensor indications recorded or derived therein into a respective time series of local sensor indications. Consequently, the light output of luminaire 120-k may be controlled based at least in part on one or more time series of local sensor indications, e.g. on a time series of local occupancy state indications and/or on a time series of local light level indications. Additionally or alternatively, the luminaire control portion 124-k may transfer at least part of the local sensor data recorded or derived therein over the lighting control network to the lighting system gateway 102, whereas the lighting system gateway 102 may control at least some aspects of operation and/or light output of the plurality of luminaires 120 based on the sensor data received from the luminaire 120-k (and/or from other ones of the plurality of luminaires 120) and/or it may transfer at least part of the sensor data received from the luminaire 120-k (and/or from other ones of the plurality of luminaires 120) to the lighting system server 103 for processing therein.

The lighting control via operation of the luminaire control portion 124-k may at least partially rely on a preprogrammed lighting control logic that defines controlling the light output of the luminaire 120-k in accordance with the local sensor data obtained from the sensor portion 122-k, thereby providing at least partially autonomous lighting control at the luminaire 120-k via application of the preprogrammed lighting control logic. As an example, the preprogrammed lighting control logic may define switching on the light output of the luminaire 120-k as a response to the local sensor data indicating occupancy (after a period of non-occupancy) and define switching off the light output of the luminaire 120-k as a response to the local sensor data indicating non-occupancy (after a period of occupancy). In this regard, the preprogrammed lighting control logic may include one or more predefined lighting control rules, where each lighting control rule may define a respective pair of a triggering condition and a lighting control action to be carried out as a response to an occurrence of the triggering condition, where the triggering condition may directly or indirectly pertain to one or more time series of local sensor indications. As a non-limiting example, the preprogrammed lighting control logic may define one or more of the following lighting control rules:
- a first lighting control rule that defines switching on the light output of the luminaire 120-k to a target light intensity or otherwise adjusting the light output of the luminaire 120-k from a lower light intensity to the target light intensity as a response to the time series of local occupancy state indications indicating a change of the occupancy state from non-occupancy to occupancy;
- a second lighting control rule that defines adjusting the light output of the luminaire 120-k (e.g. from the target light intensity) to a stand-by light intensity (e.g. switching off the light output of the luminaire 120-k) in accordance with a dimming curve as a response to the time series of local occupancy state indications indicating a change of occupancy state from occupancy to non-occupancy;
- a third lighting control rule that defines keeping on the light output of the luminaire 120-k at the target light intensity as a response to the time series of local occupancy state indications indicating continued occupancy;
- a fourth lighting control rule that defines keeping the light output of the luminaire 120-k at the stand-by light intensity as a response to the time series of local occupancy state indications indicating continued non-occupancy.

The target light intensity and the stand-by light intensity referred to above serve as respective examples of lighting control parameters that have an effect on operation of the luminaire 120-k via application of the respective lighting control rules making use of these lighting control parameters. According to an example, at least some of the lighting control parameters may be set to respective predefined values e.g. upon manufacturing, installing, configuring or reconfiguring the luminaire 120-k, whereas in another example the lighting control parameters under consideration may be set to respective values chosen in dependence of a current operational state of the luminaire 120-k, e.g. based on one or more environmental characteristics in a location of the space or area the luminaire 120-k serves to illuminate. In various examples, the target light intensity and the stand-by light intensity may be set to respective values that are applicable for providing the light output of the luminaires 120, respectively, at a target light level and at a stand-by light level. As examples in this regard, the stand-by light level may be zero or a small non-zero light level.

The dimming curve referred to above may define adjustment of the light output from the target light intensity to the stand-by light intensity via one or more intermediate light intensities over a predefined time period, where the time period may be referred to as a dimming period. Parameters that characterize the dimming curve (e.g. the intermediate light intensities and a duration of the dimming period) may be likewise considered as respective lighting control parameters that may be set upon manufacturing, installing, configuring or reconfiguring the luminaire 120-k to respective predefined default values or that may be set to respective values chosen in dependence of a current operational state of the luminaire 120-k.

In a further example, the lighting control logic may include one or more lighting control rules that are applicable for implementing so-called daylight harvesting functionality, which involves controlling the light output of the luminaire 120-k in consideration of ambient light level in the location of the space or area illuminated by the luminaire 120-k such that a combination of the light output from the luminaire 120-k and the ambient light result in providing a target light level at the respective location of said space or area. As an example in this regard, the daylight harvesting functionality may be provided via operation of the following lighting control rules:
- a fifth lighting control rule that defines increasing the light intensity applied for the light output of the respective luminaire 120-k as a response to the local light level indications indicating a light level that is below the target light level by more than a predefined margin;
- a sixth lighting control rule that defines decreasing the light intensity applied for the light output of the respective luminaire 120-k as a response to the local light level indications indicating a light level that is above the target light level by more than the predefined margin.

The luminaire control portion 124-k may further operate the communication portion 123-k to transmit (e.g. broadcast) status indication messages from the luminaire 120-k to the other nodes of the lighting control network. A status indication message may comprise one or more status indications that are descriptive of an aspect of operational status of the luminaire 120-k, e.g. that are descriptive of an occurrence of an event pertaining to the luminaire 120-k such as a lighting control action taken by the luminaire 120-k and/or a local sensor indication recorded or derived in the luminaire control portion 124-k. Conversely, the luminaire control portion 124-k may receive, via the communication portion 123-k, status indication messages (and hence status indications) from other ones of the plurality of luminaires 120. In this regard, a status indication transmitted from the luminaire 120-k may comprise e.g. an action indication that identifies a lighting control action taken at the luminaire 120-k or a sensor data indication that reports a current (or the most recent) sensor indication recorded or derived at the luminaire control portion 124-k. Non-limiting examples of action indications and sensor data indications include the following:
- a first action indication that indicates switching on the light output of the luminaire 120-k (to be transmitted e.g. due to a change of the occupancy state from non-occupancy to occupancy detected at the luminaire 120-k),
- a second action indication that indicates initiating adjustment of the light output of the luminaire 120-k to the stand-by light intensity (to be transmitted e.g. due to a change in the occupancy state from occupancy to non-occupancy detected at the luminaire 120-k),

- a third action indication that indicates keeping on the light output of the luminaire 120-k (to be transmitted e.g. due to continued occupancy detected at the luminaire 120-k),
- a fourth action indication that indicates keeping the light output of the luminaire 120-k at the stand-by light intensity (to be transmitted e.g. due to continued non-occupancy detected at the luminaire 120-k);
- a motion sensor data indication reporting the current (or the most recent) local occupancy state indication recorded or derived at the luminaire 120-k.

A status indication message may further comprise the luminaire ID assigned to the luminaire 120-k transmitting the status indication message, thereby providing an identification of the luminaire 120-k to which the status indication(s) conveyed in the status indication message pertain.

Lighting control in the lighting system 100 may at least partially rely on one or more luminaire groups defined in the framework of the lighting system 100. In one example, the luminaire groups may be non-overlapping such that a given luminaire 120-k may be assigned to (only) one of the one or more luminaire groups, whereas in another example at least some of the luminaire groups may be partially overlapping such that the given luminaire 120-k may be assigned to one or more of the one or more luminaire groups. In an example, the one or more luminaire groups may be luminaire specific such that each luminaire 120-k or at least some of the plurality of luminaires 120 have a respective luminaire group defined therefor, where the respective luminaire 120-k is assigned to the same luminaire group together with one or more other luminaires of the lighting system 100. Typically, the luminaires of a luminaire group are provided in respective locations that are relatively close to each other, the respective luminaire group thereby including a subset of the plurality of luminaires 120 that serve to illuminate a respective portion of the space or area illuminated by the lighting system 100.

At least some aspects of respective light outputs of luminaires assigned to the same luminaire group may be controlled in dependence of each other. As an example, this may involve the following:
- switching (or keeping) on the light output of a given luminaire 120-k that is assigned to a certain luminaire group in response to any luminaire of the respective luminaire group switching (or keeping) on its light output due to detecting occupancy at its respective location;
- switching (or keeping) off the light output of the given luminaire 120-k luminaire that is assigned to the respective luminaire group in case none of the luminaires of the respective luminaire group detecting occupancy in their respective locations.

With the luminaires assigned to the same luminaire group being installed in respective locations that are in relatively close proximity of each other, such group-based control of the light output ensures user comfort via not only illuminating a location where one or more occupants are detected but also illuminating locations that are relatively close to the location at which occupancy has been detected but where no occupancy has been detected, whereas energy-efficiency of such an approach may be improved via providing a lower light level in those locations where no occupancy has been detected.

Such group-based lighting control may at least partially rely on the status indication messages transmitted over the lighting control network in the course of operation of the lighting system 100. As an example in this regard, in consideration of the exemplifying status indications described in the foregoing, a given luminaire 120-k of a certain luminaire group may obtain an indication of another luminaire of the respective luminaire group activating its light output (e.g. switching on the light output) via reception of the first activation indication from the respective other luminaire or via reception of a motion sensor data indication that suggests a change from non-occupancy to occupancy at the location of the respective other luminaire. As another example, the respective luminaire 120-k may obtain an indication of the respective other luminaire of the respective luminaire group deactivating its light output (e.g. switching off of the light output or switching to a stand-by state) via reception of the second activation indication from the respective other luminaire or via reception of a motion sensor data indication that suggests a change from occupancy to non-occupancy at the location of the respective other luminaire.

Arrangement of the plurality of luminaires 120 into the one or more luminaire groups may be provided via a manual procedure carried out, for example, upon installation, configuration and/or reconfiguration of the lighting system 100. In another example, an automated procedure for luminaire grouping may be employed e.g. upon installation or in the course of operation of the lighting system 100, where the automated grouping may be based on information received in status messages received at the luminaire 120-k from other ones of the plurality of luminaires 120 and/or based on respective radio signal strength indications (RSSIs) derived at the luminaire 120-k for protocol data units (PDUs) in which the respective status messages are received at the luminaire 120-k. The one or more luminaire groups may be static or dynamic. In the former case, the one or more luminaire groups may be determined via a manual or automated procedure e.g. upon installation, configuration or reconfiguration of the lighting system 100 or shortly thereafter and the resulting one or more luminaire groups may be applied in the course of operation of the lighting system 100 until further intervention by maintenance personnel. In the latter case, the one or more luminaire groups may be automatically adapted in the course of operation of the lighting system 100 e.g. based on environmental characteristics observed in the illuminated space or area. Examples of dynamically adapted luminaire groups are provided in the following.

In the following, various non-limiting examples regarding lighting control that at least partially relies on the one or more luminaire groups defined in the framework of the lighting system 100 are described. While these examples predominantly refer to lighting control that pertains to a single luminaire group, this readily generalizes into applying respective examples separately for a plurality of luminaire groups within the lighting system 100. For brevity and editorial clarity of the description, the following examples apply terms a first luminaire 120-m and one or more second luminaires 120-n, where the first luminaire 120-m is arranged to illuminate a first location of the space or area illuminated by the lighting system 100 and where the one or more second luminaires 120-n are arranged to illuminate respective second locations of said space or area. Further in this regard, each of the first luminaire 120-m and the one or more second luminaries 120-n are luminaires of the lighting system 100 and they may be associated with each other via being assigned to the same luminaire group. In particular, the first luminaire 120-m may be any of the plurality of luminaires 120 whereas the one or more second luminaires 120-n may be luminaires that are associated with the first luminaire 120-m via the luminaire grouping applied in the framework of the lighting system 100.

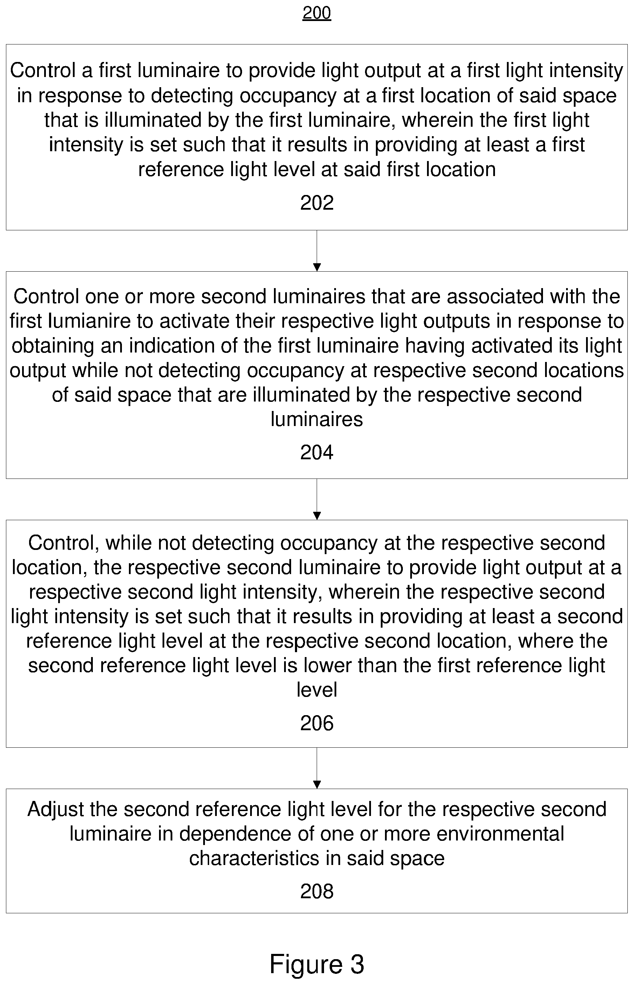

According to an example, such an at least partially group-based lighting control approach may be described via respective operations carried out by elements of the lighting system 100, e.g. by the first luminaire 120-m and the one or more second luminaires 120-n, whereas in another example such lighting control approach may be described as a steps of a method that involves lighting control operations that pertain to the first luminaire 120-m and the one or more second luminaires 120-n. As an example in this regard, Figure 3 illustrates a method 200 for lighting control in the lighting system 100, where the method 200 comprises the following steps:
- control the first luminaire 120-m to provide light output at a first light intensity in response to detecting occupancy at the first location of said space, wherein the first light intensity is set such that it results in providing at least a first reference light level at said first location (block 202);
- control the one or more second luminaires 120-n to activate their respective light outputs in response to obtaining an indication of the first luminaire 120-m having activated its light output while not detecting occupancy at the respective second locations of said space (block 204);
- control, while not detecting occupancy at the respective second location, the respective second luminaire 120-n to provide light output at a respective second light intensity, wherein the respective second light intensity is set such that it results in providing at least a second reference light level at the respective second location, where the second reference light level is lower than the first reference light level (block 206); and
- adjust the second reference light level for the respective second luminaire 120-n in dependence of one or more environmental characteristics in said space (block 208).

The respective operations described with references to the method steps represented by blocks 202 to 208 may be varied or complemented in a number of ways, e.g. according to the examples described in the foregoing and/or in the following. Moreover, the method 200 may be complemented with one or more additional steps, the order of carrying out at least some of the method steps may be different from that depicted in Figure 3.

Each of the first reference light level and the second reference light level referred to in the method 200 may comprise a respective predefined light level set e.g. upon installing, configuring or reconfiguring the plurality of luminaires 120 to the space or area they serve to illuminate. In this regard, the first reference light level may be set to a value that is considered suitable or sufficient for a location of the illuminated space or area where one or more occupants are detected, whereas the second reference light level may be set to a value that is considered suitable or sufficient for an unoccupied location of the illuminated space or area that is relatively close to an occupied location. The second reference light level is substantially lower than the first reference light level since the locations where the second reference light level is applied are ones that are unoccupied but that are relatively close to an occupied location and hence a lower light level is sufficient for improved user comfort for the occupant(s) of the occupied location. The first and second reference light levels may be set, for example, by a lighting designer such that the first reference light level is sufficient in view of the intended usage of the illuminated space or area and such that the second reference light level is high enough to provide ensure visibility to the unoccupied area close to the occupied area while being low enough to facilitate energy-efficient operation of the lighting system.

According to an example, the first luminaire 120-m may apply substantially fixed first light intensity that is chosen (e.g. upon installation, configuration or reconfiguration of the first luminaire 120-m) such that it provides at least the first reference light level for the first location regardless of the ambient light in the location illuminated by the first luminaire 120-n. Along similar lines, each of the one or more second luminaires 120-m may apply substantially fixed respective second light intensity that is chosen (e.g. upon installation, configuration or reconfiguration of the respective second luminaire 120-n) such that it provides at least the second reference light level for the respective second location regardless of the ambient light in the location illuminated by the respective second luminaire 120-n. Hence, in this example, the first light intensity (for the first luminaire 120-m) and the respective second light intensities (for the one or more second luminaires 120) are set to respective predefined values, where the first light intensity is higher than the second light intensity.

According to another example, each of the first luminaire 120-m and the one or more second luminaires 120-n may be arranged to provide the daylight saving functionality described in the foregoing, e.g. via application of the fifth and fourth lighting control rules described in the foregoing as part of the lighting control logic applied in the respective luminaires 120-m, 120-n. This may result in adjusting the first light intensity and the second light intensities in accordance with the ambient light levels in the first and second locations. In an example, this may be provided via controlling the light output of the first luminaire 120-m when occupancy is detected in the first location (cf. block 202) to adjust the first light intensity in dependence of an observed light level at the first location such that the light output of the first luminaire 120-m results in providing at least the first reference light level and controlling each of the one or more second luminaires 120-n when no occupancy is detected in their respective locations (cf. block 206) to adjust the respective second light intensity in dependence of an observed light level at the respective second location such that the light output of the respective second luminaire 120-n and the ambient light jointly result in providing at least the second reference light level. Hence, in this example the first and second light intensities may be continuously (e.g. according to a predefined schedule, such as at intervals of a few seconds) adjusted to account for any changes in the ambient light level at the respective locations of the space or area in order to ensure providing the first reference light level or the second reference light level, respectively.

The environmental characteristics referred to in the foregoing in context of operations that pertain to block 208 may comprise any one or more environmental characteristics include in or derivable based on the local sensor data available at the first luminaire 120-m and/or at the one or more second luminaires 120-n. As a non-limiting example in this regard, the environmental characteristics considered in adjustment of the second reference light level may include one or more of the following:
- the ambient light level at the location of the respective second luminaire 120-n,
- the ambient temperature at the location of the respective second luminaire 120-n,
- a sound level in the space illuminated by the plurality of luminaires 120,
- an occupancy level in the space or area illuminated by the plurality of luminaires 120, e.g. an overall occupancy level in said space or area or a local occupancy level in the first location that is illuminated by the first luminaire 120-m.

In the following, examples where the ambient light level at the respective locations of the one or more second luminaires 120-n and/or the ambient temperatures at the respective locations of the second luminaries 120-n are employed as the one or more environmental characteristics that have an effect on adjustment applied to the second reference light level in context of operations that pertain to block 208.

According to an example, the respective adjustment of the second reference light level at the one or more second luminaires 120-n (cf. block 208) may be carried out based on the ambient light levels at the respective second locations of the one or more second luminaires 120-n. For a given second luminaire 120-n this involves adjusting the second reference light level for the respective second luminaire 120-n in dependence of the ambient light level at the respective second location such that a margin between the first and second reference light levels is increased with increasing ambient light level and the margin is decreased with decreasing ambient light level. In other words, the first reference light level applied by the first luminaire 120-m remains unchanged while the respective reference light levels for the one or more second luminaires 120-n are changed in accordance with changes in the light level at the location of the respective second luminaire 120-n. Such control of the second reference light level facilitates energy-efficient operation of the lighting system 100 without compromising user comfort via reduction of light output in unoccupied but yet illuminated areas when sufficient level of ambient light is available.

According to an example, the adjustment of the second reference light level may be carried out in consideration of predefined minimum and maximum light levels, e.g. such that the minimum light level comprises a predefined value that is higher than or equal to the stand-by light level and the maximum light level comprises a predefined value that is lower than the first reference light level.

According to an example, the ambient light level at the respective second location may be directly or indirectly based on observed ambient light levels at or close to the second location, where the observations may be obtained, for example, using one of the following approaches:
- The ambient light level as a function of time (e.g. the time of the day and the day of the year) may be learned based on observations made based on the local light level indications recorded or derived at the respective second luminaire 120-n. The observations applied as the basis of learning may be ones that are obtained during periods of the respective second luminaire 120-n having its light output switched off to avoid the light output of the respective second luminaire having an effect on the observed light level.
- The ambient light level as a function of time may follow a predefined mapping function (e.g. a mapping curve or a mapping table) that defines the ambient light level at the respective second location as a function of time (e.g. the time of the day and the day of the year), which predefined mapping function may be set manually e.g. upon installation, configuration or reconfiguration of the respective second luminaire 120-n or it may be received in the course of operation of the respective second luminaire 120-n over the lighting control network (via the lighting system gateway 102) from the lighting system server 103.
- The current ambient light level may be measured using a further light sensor that is arranged to measure the ambient light level at the location of the respective second luminaire 120-n and/or in the space illuminated by the lighting system 100 in general. In this regard, the further light sensor may be arranged such that it does not receive the light originating from the respective second luminaire 120-k and/or from other ones of the plurality of luminaires 120.

Along the lines described in the foregoing, each of the plurality of luminaires 120 may be arranged to significantly reduce or even completely switch off its light output as a response to detecting non-occupancy after a period of occupancy at its location by reducing the light intensity of the respective luminaire 120-k to the stand-by light intensity via one or more intermediate light intensities over the dimming period. This may be implemented, for example, via application of the second lighting control rule described in the foregoing as part of the lighting control logic applied in the respective luminaires 120-k.

According to an example, application of the dimming curves in the first luminaire 120-m and in the one or more second luminaires 120-n may involve controlling the first luminaire 120-m to decrease its light output over a first predefined time period (e.g. a first dimming period) to the stand-by light intensity to provide the stand-by light level at said first location in response to detecting non-occupancy after a period of occupancy at said first location and controlling the one or more second luminaires 120-n to decrease their respective light outputs over a second predefined time period (e.g. a second dimming period) to the stand-by light intensity in order to provide the stand-by light level at the respective second location in response to obtaining, during a continued period of non-occupancy at the respective second location, an indication of the first luminaire 120-m having detected non-occupancy after a period of occupancy at said first location. Herein, the second predefined time period is shorter than the first predefined time period, thereby reducing the light level in the respective second locations (which were not recently occupied) faster than in the first location (which was recently occupied).

Moreover, for each of the one or more second luminaires 120-n the duration of the second time period may be adjusted in dependence of the ambient light level at the respective second location such that the second time period is made shorter with increasing ambient light level and the second time period is made longer with decreasing ambient light level. In this regard, the adjustment of the duration of the second time period may be carried out in consideration of predefined minimum and maximum durations, e.g. such that the minimum duration comprises a predefined non-zero value that smaller than the default duration of the second dimming period and the maximum duration comprises a predefined value that is larger than said default duration but smaller than first predefined time period applied by the first luminaire 120-m. Such control of the dimming period duration at the one or more second luminaires 120-n facilitates energy-efficient operation of the lighting system 100 without compromising user comfort via reduction of light output in unoccupied but yet illuminated areas when sufficient level of ambient light is available.

Each of the first time period (e.g. the first dimming period) and second time period (e.g. the second dimming period) may comprise a time period of respective predefined duration, which may be set e.g. upon installing, configuring or reconfiguring the plurality of luminaires 120 to the space or area they serve to illuminate, whereas the second time period (e.g. the second dimming period) may be adjusted in the course of operation of the lighting system 100 in accordance with the ambient light level as described above. The first and second time periods may be set, for example, by a lighting designer in view of the intended usage of the illuminated space or area such that the first time period results in adjusting the light output to the stand-by light level with a first delay that is considered suitable for a recently occupied area while the second time period results in adjusting the light output to the stand-by light level with a second delay (that is shorter than the first delay and) that is considered suitable for a recently non-occupied area in vicinity of the recently occupied area. The stand-by light level described in the foregoing may comprise a respective predefined light level set e.g. upon installing, configuring or reconfiguring the plurality of luminaires 120 to the space or area they serve to illuminate. In this regard, the stand-by light level may be set to a value that is considered suitable or sufficient in view of the intended usage of the illuminated space or area. e.g. to zero or to a small non-zero value.

According to an example, the respective adjustment of the second reference light level at the one or more second luminaires 120-n (cf. block 208) may be carried out based on the ambient temperatures at the respective second locations of the one or more second luminaires 120-n. For a given second luminaire 120-n this involves adjusting the second reference light level for the respective second luminaire 120-n in dependence of the ambient temperature at the respective second location such that a margin between the first and second reference light levels is increased with increasing ambient temperature and the margin is decreased with decreasing ambient temperature. In other words, the first reference light level applied by the first luminaire 120-m remains unchanged while the respective reference light levels for the one or more second luminaires 120-n are changed in accordance with changes in the ambient temperature at the location of the respective second luminaire 120-n. Such control of the second reference light level facilitates avoidance of additional heating of the illuminated space or area due to heat generated by the one or more second luminaires 120-n in operating conditions where the ambient temperature is relatively high.

As an example in this regard, the second reference light level may be kept at its predefined value in case an observed ambient temperature is substantially at a predefined reference temperature and the second reference light level may be set a value that is lower than its predefined value in case the observed ambient temperature is higher than the reference temperature. According to an example, the second reference light level may be kept at its predefined value in case the observed ambient temperature is lower than the reference temperature, whereas according to another example the second reference light level may be set a value that is higher than its predefined value in case the observed ambient temperature is lower than the reference temperature.

The relationship between the observed temperature in relation to the observed ambient temperature and the adjustment to be applied to the second reference light level may be determined, for example, via a predefined mapping function (e.g. a mapping curve or a mapping table). The reference temperature and/or the mapping function may be defined or set e.g. e.g. upon installing, configuring or reconfiguring the respective luminaire 120-k.

As an example, the ambient temperature at the respective second location may be directly or indirectly based on observed ambient temperatures at or close to the second location, where the observations may be obtained, for example, using one of the following approaches:
- The ambient temperature may be determined based on local temperature indications recorded or derived at the respective second luminaire 120-n based on a temperature sensor signal received from the sensor portion 122-n therein.
- The ambient temperature may be determined based on temperature measurements carried out by a temperature sensor integrated or embedded to a processor applied in implementing the lighting control apparatus 125-n at the respective second luminaire 120-n.
- The ambient temperature as a function of time (e.g. the time of the day and the day of the year) may be learned based on the local temperature indications recorded or derived at the respective second luminaire 120-n. The observations applied as the basis of learning may be ones that are obtained during periods of the respective second luminaire 120-n having its light output switched off to mitigate the effect of heat generated via operation of the respective second luminaire 120-n on the observed temperature.
- The ambient temperature as a function of time may follow a predefined mapping function (e.g. a mapping curve or a mapping function) that defines the ambient temperature at the respective second location as a function of time (e.g. the time of the day and the day of the year), which predefined mapping function may be set manually e.g. upon installation, configuration or reconfiguration of the respective second luminaire 120-n or it may be received in the course of operation of the respective second luminaire 120-n over the lighting control network (via the lighting system gateway 102) from the lighting system server 103.
- The current ambient temperature may be measured using a further temperature sensor that is arranged to measure the ambient temperature at the location of the respective second luminaire 120-n and/or in the space illuminated by the lighting system 100 in general. In this regard, the further temperature sensor may be arranged such that it is not affected by the heat generated by the respective second luminaire 120-k and/or by other ones of the plurality of luminaires 120.

In the foregoing, an example that involves application of the daylight saving functionality at the first luminaire 120-m and the one or more second luminaires 120-n with adjustment of the duration of the dimming periods in the one or more second luminaires 120-n in dependence of the ambient light level is described. In a variation of this example, the second reference light level may be adjusted in dependence of the ambient temperature at the respective second location such that said second time period is made shorter with increasing ambient temperature and said time period is made longer with decreasing ambient temperature. Such control of the dimming period duration at the one or more second luminaires 120-n facilitates avoidance of additional heating of the illuminated space or area due to heat generated by the one or more second luminaires 120-n in operating conditions where the ambient temperature is relatively high.

According to an example, the respective adjustment of the second reference light level at the one or more second luminaires 120-n (cf. block 208) may be carried out based on respective combinations of the ambient light levels and the ambient temperatures at the respective second locations of the one or more second luminaires 120-n. For a given second luminaire 120-n this may involve e.g. the following:
- obtaining a plurality of predefined light level adjustment curves, where each light level adjustment curve defines a respective margin between the first reference light level and the second reference light level as a function of ambient light level and has a respective ambient temperature assigned thereto,
- selecting one of the light level adjustment curves for the respective second luminaire 120-n in dependence of the ambient temperature at the respective second location, and
- adjusting the second reference light level such that the margin between the first and the second reference light levels is set in accordance with the selected light level adjustment curve in dependence of the ambient light level at the respective second location.

Each of the light level adjustment curves may define the relationship between the first and second reference light levels for the respective ambient temperature. The light level adjustment curves may be stored in a memory provided at the respective second luminaire 120-n (for example in a memory provided in the lighting control apparatus 125-n therein) e.g. upon manufacturing, installing, configuring or reconfiguring the respective luminaire 120-k. The light level adjustment curves may be based on experimental data.

The light level adjustment curves provided for different ambient temperatures may be different from each other, thereby allowing for definition of different ambient-light-dependency between the first and second reference light levels at different ambient temperatures. This allows, for example, defining the trade-off between energy saving and user comfort at a certain ambient temperature independently of the corresponding trade-off defined for other ambient temperatures considered via the light level adjustment curves. In an example, the light level adjustment curves may be designed to be suited for a wide variety of different illuminated spaces or areas (e.g. in terms of their size and/or intended purpose), whereas in another example the light level adjustment curves may be tailored to be suited for a space or area of specific size and/or a specific purpose.

In the foregoing, respective examples that involve application of the daylight saving functionality at the first luminaire 120-m and the one or more second luminaires 120-n with adjustment of the duration of the dimming periods in the one or more second luminaires 120-n in dependence of the ambient light level is described or in dependence of the ambient temperature are provided. In a further variation of these examples, the adjustment of the respective dimming periods in the one or more second luminaires 120-n may be carried out based on respective combinations of the ambient light levels and the ambient temperatures at the respective second locations of the one or more second luminaires 120-n. For a given second luminaire 120-n the adjustment may involve e.g. the following:
- obtaining a plurality of predefined dimming period adjustment curves where each dimming period adjustment curve defines a respective change in duration of said second time period as a function of ambient light level and has a respective ambient temperature assigned thereto,
- selecting one of the dimming period adjustment curves for the respective second luminaire 120-n in dependence of the ambient temperature at the respective second location, and
- adjusting a duration of said second time period for the respective second luminaire (120-n) in accordance with the selected dimming period adjustment curve in dependence of the ambient light level at the respective second location.

According to an example, each of the dimming period adjustment curves may define a difference to the default duration of the second dimming period for the respective ambient temperature, whereas in another example each of the dimming period adjustment curves may define a difference to the first dimming period for the respective ambient temperature. The dimming period adjustment curves may be stored in a memory provided at the respective second luminaire 120-n (for example in a memory provided in the lighting control apparatus 125-n therein) e.g. upon manufacturing, installing, configuring or reconfiguring the respective luminaire 120-k. The dimming period adjustment curves may be based on experimental data.

The dimming period adjustment curves provided for different ambient temperatures may be different from each other, thereby allowing for definition of different ambient-light-dependency for the second dimming period at different ambient temperatures. This allows, for example, defining the trade-off between energy saving and user comfort at a certain ambient temperature independently of the corresponding trade-off defined for other ambient temperatures considered via the dimming period adjustment curves. In an example, the dimming period adjustment curves may be designed to be suited for a wide variety of different illuminated spaces or areas (e.g. in terms of their size and/or intended purpose), whereas in another example the dimming period adjustment curves may be tailored to be suited for a space or area of specific size and/or a specific purpose.

As described in the foregoing, the one or more luminaire groups applied in the lighting control may be static luminaire groups that remain unchanged until an intervention by maintenance personnel occurs or dynamic luminaire groups that may be automatically adapted in the course of operation of the lighting system 100. According to an example, respective compositions of the one or more luminaire groups may be adapted based on one or more environmental characteristics in the space or area illuminated by the lighting system 100. As an example in this regard, two or more different predefined luminaire groupings may be defined for the lighting system 100, including a first luminaire grouping that defines relatively large one or more luminaire groups (in terms of the number of luminaires included in each the one or more luminaire groups) and a second luminaire grouping that defines relatively small one or more luminaire groups (in terms of the number of luminaires included in each of the luminaire groups), where one of the first or second luminaire groupings may be chosen for application in the course of operation of the lighting system 100 in dependence of the one or more environmental characteristics in the space or area illuminated by the lighting system 100.

As non-limiting examples of the above-described selection of one of the first or second luminaire groupings based on the one or more environmental characteristics in said space, the selection may be dependent on the ambient light level in said space and/or on the ambient temperature in said space e.g. as follows:
- The first luminaire grouping (that involves larger luminaire groups) may be applied in case the ambient light level in said space is relatively low, whereas the second luminaire grouping (that involves smaller luminaire groups) may be applied in case the ambient light level in said space is relatively high. This may be implemented, for example, via selecting the first luminaire grouping in response to the ambient light level exceeding a light level threshold and selecting the second luminaire grouping in response to the ambient light level not exceeding the light level threshold. Such an approach results in reducing the size of the illuminated non-occupied sub-area in proximity of an occupied location of said space or area in scenarios where the amount of ambient light is relatively high and/or increasing the size of the illuminated non-occupied sub-area in proximity of an occupied location of said space or area in scenarios where the amount of ambient light is relatively low, thereby reducing energy consumption in conditions where sufficient amount of ambient light is available.
- The first luminaire grouping (that involves larger luminaire groups) may be applied in case the ambient temperature in said space is relatively low, whereas the second luminaire grouping (that involves smaller luminaire groups) may be applied in case the ambient temperature in said space is relatively high. This may be implemented, for example, via selecting the first luminaire grouping in response to the ambient temperature exceeding a temperature threshold and selecting the second luminaire grouping in response to the ambient temperature not exceeding the temperature threshold. Such an approach results in reducing the size of the illuminated non-occupied sub-area in proximity of an occupied location of said space or area in scenarios where the ambient temperature is relatively high and/or increasing the size of the illuminated non-occupied sub-area in proximity of an occupied location of said space or area in scenarios where the amount of ambient light is relatively low, thereby avoiding generation of excess additional heat via operation of the plurality of luminaires 120 in relatively hot operating conditions.

While the specific examples above pertain to selection of the luminaire grouping in dependence of the ambient light level and/or in dependence of the ambient temperature, the ambient light level and the ambient temperature serve as non-limiting examples of applicable environmental characteristics and e.g. any other environmental characteristics described in the foregoing may be applied instead as basis of the selection.

As another example of dynamically adjusted luminaire groups, the luminaire grouping may be based on proximity of the plurality of luminaires 120 to each other and the grouping may be adjusted or changed in dependence of the one or more environmental characteristics in the space or area illuminated by the lighting system 100. As an example in this regard, a luminaire specific luminaire group for a certain luminaire 120-k may be defined such that it includes, in addition to the respective luminaire 120-k, those other ones of the plurality of luminaires 120 that are located within a predefined threshold distance from the respective luminaire 120-k. Consequently, in consideration of the method 200, the respective luminaire 120-k may serve as the first luminaire 120-m upon detecting occupancy in its location, whereas those luminaires assigned to the same luminaire group with the respective luminaire 120-k that have not detected occupancy in their respective locations may serve as respective second luminaires 120-n that are associated with the first luminaire 120-m.

With such luminaire specific luminaire groups, the size of the luminaire group for the respective luminaire 120-k may be adapted via adjusting or choosing the threshold distance in dependence of the one or more environmental characteristics in the space or area illuminated by the lighting system. As a non-limiting example, such adaptation of the threshold distance may be carried out using at least one of the following approaches:
- The threshold distance may be adjusted in dependence of the ambient light level in said space such that the threshold distance is increased with decreasing ambient light level and the threshold distance is decreased with increasing ambient light level, thereby reducing the energy consumption of the lighting system 100 when sufficient amount of ambient light is available without compromising user comfort in conditions where a lesser amount of ambient light is available.
- The threshold distance may be adjusted in dependence of the ambient temperature in said space such that the threshold distance is increased with decreasing ambient temperature and the threshold distance is decreased with increasing ambient temperature, thereby reducing the heat generated by the plurality of luminaires 120 in relatively hot operating conditions.

In a variation of the example of dynamic adjustment of the luminaire groups provided above, a luminaire specific luminaire group for a certain luminaire 120-k may be defined such that it includes, in addition to the respective luminaire 120-k, (at most) a predefined number of other ones of the plurality of luminaires 120 that are closest to the respective luminaire 120-k. In this example, the size of the luminaire group for the respective luminaire 120-k may be adapted via adjusting or choosing the (maximum) number of other luminaries included in the luminaire group in dependence of the one or more environmental characteristics in the space or area illuminated by the lighting system. As a non-limiting example, such adaptation of the (maximum) number of luminaires may be carried out using at least one of the following approaches:
- The (maximum) number of luminaires may be adjusted in dependence of the ambient light level in said space such that the (maximum) number of luminaries is increased with decreasing ambient light level and the (maximum) number of luminaries is decreased with increasing ambient light level, thereby reducing the energy consumption of the lighting system 100 when sufficient amount of ambient light is available without compromising user comfort in conditions where a lesser amount of ambient light is available.
- The (maximum) number of luminaries may be adjusted in dependence of the ambient temperature in said space such that the (maximum) number of luminaries is increased with decreasing ambient temperature and the (maximum) number of luminaries is decreased with increasing ambient temperature, thereby reducing the heat generated by the plurality of luminaires 120 in relatively hot operating conditions.

In another variation of the above examples regarding dynamic adjustment of the luminaire groups provided above, both the threshold distance and the (maximum) number of (other) luminaires included in the luminaire group may be applied and adjusted as described above.

In a further variation of the above examples of dynamic adjustment of the luminaire groups provided above, the luminaire specific luminaire group of a certain luminaire 120-k that includes e.g. those other ones of the plurality of luminaires 120 that are within the predefined (or adjusted) distance from the respective luminaire or the predefined (or adjusted) number of other ones of the plurality of luminaires 120 that are closest to the respective luminaires may be applied the other way around in consideration of the method 200: in case of any other luminaire 120-p assigned to the luminaire group of the respective luminaire detects occupancy in its respective location without the respective luminaire 120-k detecting occupancy in its location, the respective other luminaire 120-p may serve as the first luminaire 120-m while the respective luminaire 120-k may serve as (one of) the second luminaire(s) 120-n that is associated with the first luminaire 120-m.

In the foregoing, various aspects that pertain to adjustment of light output characteristics of the one or more second luminaires are described with reference to lighting control carried out in accordance with the method 200 in the framework of the lighting system 100 according to the example of Figure 1, which involves at least partially autonomously operating luminaires that are communicatively coupled to each other via the wireless lighting control network. This is, however, a non-limiting example and the lighting control in accordance with the method 200 may be provided in lighting systems of different kind. In this regard, exemplifying variations to the lighting system 100 may include one or more of the following:
- The lighting control network that communicatively couples the plurality of luminaires 120 to each other and to the lighting system gateway 102 may be provided using a predefined lighting control protocol, such as the Digital Addressable Lighting Interface (DALI) specified in a series of technical standards IEC 62386, whereas the respective communication portions 123-k in the plurality of luminaires 120 may be arranged to provide respective communication interfaces that enable communication over the lighting control network in accordance with the applicable lighting control protocol.
- The lighting control logic for controlling the respective light outputs of the plurality of luminaires 120-k may be implemented in a central control unit, which may receive the respective sensor data from the plurality of luminaires 120-k, apply the lighting control rules separately for each of the plurality of luminaires 120 to derive the respective lighting control actions, and transmit respective lighting control commands that implement the derived lighting control actions over the lighting control network to the plurality of luminaires 120 for application by the respective luminaire control portions 124-k therein. In this regard, the centralized lighting control may be provided via operation of the lighting system gateway 102 or a dedicated lighting control entity that is communicatively coupled to the plurality of luminaires 120 via the lighting control network.
- The lighting system may further comprise, instead of or in addition to the respective sensors portions 122-k of the plurality of luminaires 120-k, one or more sensor units that each include respective one or more sensors arranged to observe one or more environmental characteristics at respective locations of the space or area illuminated by the lighting system 100 and that provide the respective sensor data captured therein to the lighting system gateway 102 or to a dedicated lighting control entity that is arranged to implement centralized lighting control.

Figure 4 illustrates a block diagram of some components of an apparatus 300 that may be employed to implement at least some of the operations described with references to the lighting control apparatus 125-k, the lighting system gateway 102 or the lighting system server 103. The apparatus 300 comprises a processor 310 and a memory 320. The memory 320 may store data and computer program code 325. The apparatus 300 may further comprise communication means 330 for wired or wireless communication with other apparatuses, where the communication means 330 may comprise e.g. the respective communication portion 123-k. The apparatus 300 may further comprise user I/O (input/output) components 340 that may be arranged, together with the processor 310 and a portion of the computer program code 325, to provide a user interface for receiving input from a user and/or providing output to the user. In particular, the user I/O components may include user input means, such as one or more keys or buttons, a keyboard, a touchscreen or a touchpad, etc. The user I/O components may include output means, such as a display or a touchscreen. The components of the apparatus 300 are communicatively coupled to each other via a bus 350 that enables transfer of data and control information between the components.

The memory 320 and a portion of the computer program code 325 stored therein may be further arranged, with the processor 310, to cause the apparatus 300 to perform at least some aspects of operation of the lighting control apparatus 125-k, the lighting system gateway 102 or the lighting system server 103. The processor 310 is configured to read from and write to the memory 320. Although the processor 310 is depicted as a respective single component, it may be implemented as respective one or more separate processing components. Similarly, although the memory 320 is depicted as a respective single component, it may be implemented as respective one or more separate components, some or all of which may be integrated/removable and/or may provide permanent / semi-permanent/ dynamic/cached storage.

The computer program code 325 may comprise computer-executable instructions that implement at least some aspects of operation of the respective one of the lighting control apparatus 125-k, the lighting system gateway 102 or the lighting system server 103 when loaded into the processor 310. As an example, the computer program code 325 may include a computer program consisting of one or more sequences of one or more instructions. The processor 310 is able to load and execute the computer program by reading the one or more sequences of one or more instructions included therein from the memory 320. The one or more sequences of one or more instructions may be configured to, when executed by the processor 310, cause the apparatus 400 to perform at least some aspects of operation of the respective one of the lighting control apparatus 125-k, the lighting system gateway 102 or the lighting system server 103. Hence, the apparatus 300 may comprise at least one processor 310 and at least one memory 320 including the computer program code 325 for one or more programs, the at least one memory 320 and the computer program code 325 configured to, with the at least one processor 310, cause the apparatus 300 to perform at least some aspects of operation of the respective one of the lighting control apparatus 125-k, the lighting system gateway 102 or the lighting system server 103.

The computer program code 325 may be provided e.g. a computer program product comprising at least one computer-readable non-transitory medium having the computer program code 325 stored thereon, which computer program code 325, when executed by the processor 310 causes the apparatus 300 to perform at least some aspects of operation of the respective one of the lighting control apparatus 125-k, the lighting system gateway 102 or the lighting system server 103. The computer-readable non-transitory medium may comprise a memory device or a record medium that tangibly embodies the computer program. As another example, the computer program may be provided as a signal configured to reliably transfer the computer program.

Reference(s) to a processor herein should not be understood to encompass only programmable processors, but also dedicated circuits such as field-programmable gate arrays (FPGA), application specific circuits (ASIC), signal processors, etc.

## Claims

1. A method (200) for lighting control in a lighting system (100) comprising a plurality of luminaires (120) for illuminating a space, the plurality of luminaires (120) including a first luminaire (120-m) arranged for illuminating a first location of said space and one or more second luminaires (120-n) that are associated with the first luminaire (120-m) and arranged for illuminating respective second locations of said space, the method (200) comprising:
controlling (202) the first luminaire (120-m) to provide light output at a first light intensity in response to detecting occupancy at said first location, wherein the first light intensity is set such that it results in providing at least a first reference light level at said first location;
controlling (204) the one or more second luminaires (120-n) to activate their respective light outputs in response to obtaining an indication of the first luminaire having activated its light output while not detecting occupancy at the respective second locations;
controlling (206), while not detecting occupancy at the respective second location, the respective second luminaire (120-n) to provide light output at a respective second light intensity, wherein the respective second light intensity is set such that it results in providing at least a second reference light level at the respective second location, where the second reference light level is lower than the first reference light level; and
adjusting (208) the second reference light level for the respective second luminaire in dependence of one or more environmental characteristics in said space,
**characterized in that** the method (200) comprises keeping the first reference light level for the first luminaire (120-m) unchanged and said adjusting (208) comprises adjusting the second reference light level for the respective second luminaire (120-n) such that a margin between the first and second reference light levels is changed in dependence of the one or more environmental characteristics at the respective second location.

2. A method (200) according to claim 1,
wherein controlling the first luminaire (120-m) to provide light output at the first light intensity comprises adjusting the first light intensity in dependence of an observed light level at said first location such that the light output of the first luminaire (120-m) results in providing at least the first reference light level at said first location, and
wherein controlling the respective second luminaire (120-n) to provide light output at the respective second light intensity comprises adjusting the respective second light intensity in dependence of an observed light level at the respective second location such that the light output of the respective second luminaire (120-n) and the ambient light jointly result in providing at least the second reference light level at the respective second location.

3. A method (200) according to claim 1 or 2, wherein said respective one or more environmental characteristics comprise one or more of the following:
an ambient light level at the respective second location,
an ambient temperature at the respective second location,
a sound level in said space,
an occupancy level in said space.

4. A method (200) according to any of claims 1 to 3, wherein adjusting (208) the second reference light level for the respective second luminaire (120-n) comprises adjusting the second reference light level in dependence of the ambient light level at the respective second location such that the margin between the first and second reference light levels is increased with increasing ambient light level and the margin is decreased with decreasing ambient light level.

5. A method (200) according to any of claims 1 to 4, comprising:
controlling the first luminaire (120-m) to decrease its light output over a first predefined time period to provide a stand-by light level at said first location in response to detecting non-occupancy after a period of occupancy at said first location;
controlling the respective second luminaire (120-n) to decrease its light output over a second predefined time period to provide the stand-by light level at the respective second location in response to obtaining, during a continued period of non-occupancy at the respective second location, an indication of the first luminaire (120-m) having detected non-occupancy after a period of occupancy at said first location, wherein the second predefined time period is shorter than the first predefined time period; and
adjusting a duration of said second time period for the respective second luminaire (120-n) in dependence of the ambient light level at the respective second location such that said second time period is made shorter with increasing ambient light level and said second time period is made longer with decreasing ambient light level.

6. A method (200) according to any of claims 1 to 3, wherein adjusting (208) the second reference light level for the respective second luminaire (120-n) comprises adjusting the second reference light level in dependence of the ambient temperature at the respective second location such that the margin between the first and second reference light levels is increased with increasing ambient temperature and the margin is decreased with decreasing ambient temperature.

7. A method (200) according to any of claims 1 to 3 or 6, further comprising:
controlling the first luminaire (120-m) to decrease its light output over a first predefined time period to provide a stand-by light level at said first location in response to detecting non-occupancy after a period of occupancy at said first location;
controlling the respective second luminaire (120-n) to decrease its light output over a second predefined time period to provide the stand-by light level at the respective second location in response to obtaining, during a continued period of non-occupancy at the respective second location, an indication of the first luminaire (120-m) having detected non-occupancy after a period of occupancy at said first location, wherein the second predefined time period is shorter than the first predefined time period; and
adjusting a duration of said time second period for the respective second luminaire (120-n) in dependence of the ambient temperature at the respective second location such that said second time period is made shorter with increasing ambient temperature and said time period is made longer with decreasing ambient temperature.

8. A method (200) according to any of claims 1 to 3, wherein adjusting (208) the second reference light level for the respective second luminaire (120-n) comprises
obtaining a plurality of predefined light level adjustment curves, where each light level adjustment curve defines a respective margin between the first reference light level and the second reference light level as a function of ambient light level and has a respective ambient temperature assigned thereto;
selecting one of the light level adjustment curves for the respective second luminaire (120-n) in dependence of the ambient temperature at the respective second location; and
adjusting the second reference light level such that the margin between the first and the second reference light levels is set in accordance with the selected light level adjustment curve in dependence of the ambient light level at the respective second location.

9. A method (200) according to any of claims 1 to 3 or 8, further comprising:
controlling the first luminaire (120-m) to decrease its light output over a first predefined time period to provide a stand-by light level at said first location in response to detecting non-occupancy after a period of occupancy at said first location;
controlling the respective second luminaire (120-n) to decrease its light output over a second predefined time period to provide the stand-by light level at the respective second location in response to obtaining, during a continued period of non-occupancy at the respective second location, an indication of the first luminaire (120-m) having initiated deactivation of its light output;
obtaining a plurality of predefined dimming period adjustment curves where each dimming period adjustment curve defines a respective change in duration of said second time period as a function of ambient light level and has a respective ambient temperature assigned thereto;
selecting one of the dimming period adjustment curves for the respective second luminaire (120-n) in dependence of the ambient temperature at the respective second location; and
adjusting a duration of said second time period for the respective second luminaire (120-n) in accordance with the selected dimming period adjustment curve in dependence of the ambient light level at the respective second location.

10. A method (200) according to any of claims 1 to 9, wherein the number of said one or more second luminaires (120-n) that are associated with the first luminaire (120-m) is adapted based on the one or more environmental characteristics in said space.

11. A method (200) according to any of claims 1 to 10,
wherein said one or more second luminaires (120-n) comprise a predefined number of other ones of the plurality of luminaires that are closest to the first luminaire (120), and
wherein said predefined number is chosen in dependence of one or more environmental characteristics in said space.

12. A method (200) according to claim 11, wherein at least one of the following applies:
said predefined number is adjusted in dependence of an ambient light level in said space such that said number of luminaires is increased with decreasing ambient light level and said number of luminaires is decreased with increasing ambient light level;
said number of luminaires is adjusted in dependence of an ambient temperature in said space such that said number of luminaires is increased with decreasing ambient temperature and said number of luminaires is decreased with increasing ambient temperature.

13. A method (200) according to any of claims 1 to 12,
wherein said one or more second luminaires (120-n) comprise other ones of the plurality of luminaires that are located within a threshold distance from the first luminaire (120-m), and
wherein said threshold distance is chosen in dependence of one or more environmental characteristics in said space.

14. A method (200) according to claim 13, wherein at least one of the following applies:
said threshold distance is adjusted in dependence of an ambient light level in said space such that said threshold distance is increased with decreasing ambient light level and said threshold distance is decreased with increasing ambient light level;
said threshold distance is adjusted in dependence of an ambient temperature in said space such that said threshold distance is increased with decreasing ambient temperature and said threshold distance is decreased with increasing ambient temperature.

15. A lighting system (100) comprising a plurality of luminaires (120) for illuminating a space and one or more control entities (125-k, 102) for controlling respective light output of said plurality of luminaires (120), the plurality of luminaires (120) including a first luminaire (120-m) arranged for illuminating a first location of said space and one or more second luminaires (120-n) that are associated with the first luminaire (120-m) and arranged for illuminating respective second locations of said space, wherein the one or more control entities (125-k, 102) are arranged to:
control the first luminaire (120-m) to provide light output at a first light intensity in response to detecting occupancy at said first location, wherein the first light intensity is set such that it results in providing at least a first reference light level at said first location;
control the one or more second luminaires (120-n) to activate their respective light outputs in response to obtaining an indication of the first luminaire (120-m) having activated its light output while not detecting occupancy at the respective second locations;
control, while not detecting occupancy at the respective second location, the respective second luminaire (120-n) to provide light output at a second light intensity, wherein the respective second light intensity is set such that it results in providing at least a second reference light level at the respective second location, where the second reference light level is lower than the first reference light level; and
adjusting the second reference light level for the respective second luminaire (120-n) in dependence of one or more environmental characteristics in said space,
**characterized in that** the one or more control entities (125-k, 102) are arranged to keep the first reference light for the first luminaire (120-m) unchanged and adjust the second reference light level for the respective second luminaire (120-n) such that a margin between the first and second reference light levels is changed in dependence of the one or more environmental characteristics at the respective second location.

## Patentansprüche

1. Verfahren (200) zur Beleuchtungssteuerung in einem Beleuchtungssystem (100), das mehrere Leuchten (120) zum Beleuchten eines Raums umfasst, wobei die mehreren Leuchten (120) eine erste Leuchte (120-m), die zum Beleuchten eines ersten Orts des Raums angeordnet ist, und eine oder mehrere zweite Leuchten (120-n 200), die der ersten Leuchte (120-m) zugeordnet sind und zum Beleuchten jeweiliger zweiter Orte des Raums angeordnet sind, umfassen:
Steuern (202) der ersten Leuchte (120-m), um eine Lichtausgabe mit einer ersten Lichtintensität bereitzustellen, als Antwort auf das Detektieren einer Belegung an dem ersten Ort, wobei die erste Lichtintensität so eingestellt ist, dass sie dazu führt, dass mindestens ein erster Referenzlichtpegel an dem ersten Ort bereitgestellt wird;
Steuern (204) der einen oder der mehreren zweiten Leuchten (120-n), um ihre jeweiligen Lichtausgaben zu aktivieren, als Antwort auf das Erhalten einer Angabe, dass die erste Leuchte ihre Lichtausgabe aktiviert hat, während keine Belegung an den jeweiligen zweiten Orten detektiert wird;
Steuern (206) der jeweiligen zweiten Leuchte (120-n), während keine Belegung an dem jeweiligen zweiten Ort detektiert wird, um eine Lichtausgabe mit einer jeweiligen zweiten Lichtintensität bereitzustellen, wobei die jeweilige zweite Lichtintensität so eingestellt ist, dass sie dazu führt, dass mindestens ein zweiter Referenzlichtpegel an dem jeweiligen zweiten Ort bereitgestellt wird, wobei der zweite Referenzlichtpegel niedriger als der erste Referenzlichtpegel ist; und
Anpassen (208) des zweiten Referenzlichtpegels für die jeweilige zweite Leuchte in Abhängigkeit von einer oder mehreren Umgebungscharakteristiken in dem Raum,
**dadurch gekennzeichnet, dass** das Verfahren (200) ein Unveränderthalten des ersten Referenzlichtpegels für die erste Leuchte (120-m) umfasst und das Anpassen (208) ein Anpassen des zweiten Referenzlichtpegels für die jeweilige zweite Leuchte (120-n) so, dass ein Abstand zwischen dem ersten und dem zweiten Referenzlichtpegel in Abhängigkeit von der einen oder den mehreren Umgebungscharakteristiken an dem jeweiligen zweiten Ort geändert wird, umfasst.

2. Verfahren (200) nach Anspruch 1,
wobei das Steuern der ersten Leuchte (120-m), um eine Lichtausgabe mit der ersten Lichtintensität bereitzustellen, ein Anpassen der ersten Lichtintensität in Abhängigkeit von einem beobachteten Lichtpegel an dem ersten Ort umfasst, so dass die Lichtausgabe der ersten Leuchte (120-m) dazu führt, dass mindestens der erste Referenzlichtpegel an dem ersten Ort bereitgestellt wird, und
wobei das Steuern der jeweiligen zweiten Leuchte (120-n), um eine Lichtausgabe mit der jeweiligen zweiten Lichtintensität bereitzustellen, ein Anpassen der jeweiligen zweiten Lichtintensität in Abhängigkeit von einem beobachteten Lichtpegel an dem jeweiligen zweiten Ort umfasst, so dass die Lichtausgabe der jeweiligen zweiten Leuchte (120-n) und das Umgebungslicht gemeinsam dazu führen, dass mindestens der zweite Referenzlichtpegel an dem jeweiligen zweiten Ort bereitgestellt wird.

3. Verfahren (200) nach Anspruch 1 oder 2, wobei die jeweilige eine oder die jeweiligen mehreren Umgebungscharakteristiken eine oder mehrere der Folgenden umfassen:
einen Umgebungslichtpegel an dem jeweiligen zweiten Ort,
eine Umgebungstemperatur an dem jeweiligen zweiten Ort,
einen Schallpegel in dem Raum,
ein Belegungsniveau in diesem Raum.

4. Verfahren (200) nach einem der Ansprüche 1 bis 3, wobei das Anpassen (208) des zweiten Referenzlichtpegels für die jeweilige zweite Leuchte (120-n) ein Anpassen des zweiten Referenzlichtpegels in Abhängigkeit von dem Umgebungslichtpegel an dem jeweiligen zweiten Ort umfasst, so dass der Abstand zwischen dem ersten und dem zweiten Referenzlichtpegel mit zunehmendem Umgebungslichtpegel erhöht wird und der Abstand mit abnehmendem Umgebungslichtpegel verringert wird.

5. Verfahren (200) nach einem der Ansprüche 1 bis 4, das umfasst:
Steuern der ersten Leuchte (120-m), um ihre Lichtausgabe über einen ersten vordefinierten Zeitraum zu verringern, um einen Bereitschaftslichtpegel an dem ersten Ort bereitzustellen, als Antwort auf das Detektieren einer Nichtbelegung nach einem Zeitraum der Belegung an dem ersten Ort;
Steuern der jeweiligen zweiten Leuchte (120-n), um ihre Lichtausgabe über einen zweiten vordefinierten Zeitraum zu verringern, um den Bereitschaftslichtpegel an dem jeweiligen zweiten Ort bereitzustellen, als Antwort auf das Erhalten einer Angabe während eines fortgesetzten Zeitraums der Nichtbelegung an dem jeweiligen zweiten Ort, dass die erste Leuchte (120-m) nach einem Zeitraum der Belegung an dem ersten Ort eine Nichtbelegung detektiert hat, wobei der zweite vordefinierte Zeitraum kürzer als der erste vordefinierte Zeitraum ist; und
Anpassen einer Dauer des zweiten Zeitraums für die jeweilige zweite Leuchte (120-n) in Abhängigkeit von dem Umgebungslichtpegel an dem jeweiligen zweiten Ort, so dass der zweite Zeitraum mit zunehmendem Umgebungslichtpegel kürzer gemacht wird und der zweite Zeitraum mit abnehmendem Umgebungslichtpegel länger gemacht wird.

6. Verfahren (200) nach einem der Ansprüche 1 bis 3, wobei das Anpassen (208) des zweiten Referenzlichtpegels für die jeweilige zweite Leuchte (120-n) ein Anpassen des zweiten Referenzlichtpegels in Abhängigkeit von der Umgebungstemperatur an dem jeweiligen zweiten Ort umfasst, so dass der Abstand zwischen dem ersten und dem zweiten Referenzlichtpegel mit zunehmender Umgebungstemperatur erhöht wird und der Abstand mit abnehmender Umgebungstemperatur verringert wird.

7. Verfahren (200) nach einem der Ansprüche 1 bis 3 oder 6, das ferner umfasst:
Steuern der ersten Leuchte (120-m), um ihre Lichtausgabe über einen ersten vordefinierten Zeitraum zu verringern, um einen Bereitschaftslichtpegel an dem ersten Ort bereitzustellen, als Antwort auf das Detektieren einer Nichtbelegung nach einem Zeitraum der Belegung an dem ersten Ort;
Steuern der jeweiligen zweiten Leuchte (120-n), um ihre Lichtausgabe über einen zweiten vordefinierten Zeitraum zu verringern, um den Bereitschaftslichtpegel an dem jeweiligen zweiten Ort bereitzustellen, als Antwort auf das Erhalten einer Angabe während eines fortgesetzten Zeitraums der Nichtbelegung an dem jeweiligen zweiten Ort, dass die erste Leuchte (120-m) eine Nichtbelegung nach einem Zeitraum der Belegung an dem ersten Ort detektiert hat, wobei der zweite vordefinierte Zeitraum kürzer als der erste vordefinierte Zeitraum ist; und
Anpassen einer Dauer der zweiten Zeitperiode für die jeweilige zweite Leuchte (120-n) in Abhängigkeit von der Umgebungstemperatur an dem jeweiligen zweiten Ort so, dass der zweite Zeitraum mit zunehmender Umgebungstemperatur kürzer und der Zeitraum mit abnehmender Umgebungstemperatur länger gemacht wird.

8. Verfahren (200) nach einem der Ansprüche 1 bis 3, wobei das Anpassen (208) des zweiten Referenzlichtpegels für die jeweilige zweite Leuchte (120-n) umfasst:
Erhalten mehrerer vordefinierter Lichtpegelanpassungskurven, wobei jede Lichtpegelanpassungskurve einen jeweiligen Abstand zwischen dem ersten Referenzlichtpegel und dem zweiten Referenzlichtpegel als eine Funktion des Umgebungslichtpegels definiert und ihr eine jeweilige Umgebungstemperatur zugewiesen ist;
Auswählen einer der Lichtpegelanpassungskurven für die jeweilige zweite Leuchte (120-n) in Abhängigkeit von der Umgebungstemperatur an dem jeweiligen zweiten Ort; und
Anpassen des zweiten Referenzlichtpegels, so dass der Abstand zwischen dem ersten und dem zweiten Referenzlichtpegel gemäß der ausgewählten Lichtpegelanpassungskurve in Abhängigkeit von dem Umgebungslichtpegel an dem jeweiligen zweiten Ort eingestellt wird.

9. Verfahren (200) nach einem der Ansprüche 1 bis 3 oder 8, das ferner umfasst:
Steuern der ersten Leuchte (120-m), um ihre Lichtausgabe über einen ersten vordefinierten Zeitraum zu verringern, um einen Bereitschaftslichtpegel an dem ersten Ort bereitzustellen, als Antwort auf das Detektieren einer Nichtbelegung nach einem Zeitraum der Belegung an dem ersten Ort;
Steuern der jeweiligen zweiten Leuchte (120-n), um ihre Lichtausgabe über einen zweiten vordefinierten Zeitraum zu verringern, um den Bereitschaftslichtpegel an dem jeweiligen zweiten Ort bereitzustellen, als Antwort auf das Erhalten einer Angabe während eines fortgesetzten Zeitraums der Nichtbelegung an dem jeweiligen zweiten Ort, dass die erste Leuchte (120-m) eine Deaktivierung ihrer Lichtausgabe initiiert hat;
Erhalten mehrerer vordefinierter Dimmzeitraumsanpassungskurven, wobei jede Dimmzeitraumsanpassungskurve eine jeweilige Änderung der Dauer des zweiten Zeitraums als eine Funktion des Umgebungslichtpegels definiert und ihr eine jeweilige Umgebungstemperatur zugewiesen ist;
Auswählen einer der Dimmzeitraumsanpassungskurve für die jeweilige zweite Leuchte (120-n) in Abhängigkeit von der Umgebungstemperatur an dem jeweiligen zweiten Ort; und
Anpassen einer Dauer des zweiten Zeitraums für die jeweilige zweite Leuchte (120-n) gemäß der ausgewählten Dimmzeitraumsanpassungskurve in Abhängigkeit von dem Umgebungslichtpegel an dem jeweiligen zweiten Ort.

10. Verfahren (200) nach einem der Ansprüche 1 bis 9, wobei die Anzahl der einen oder der mehreren zweiten Leuchten (120-n), die der ersten Leuchte (120-m) zugeordnet sind, basierend auf der einen oder den mehreren Umgebungscharakteristiken in dem Raum angepasst wird.

11. Verfahren (200) nach einem der Ansprüche 1 bis 10, wobei die eine oder die mehreren zweiten Leuchten (120-n) eine vordefinierte Anzahl anderer der mehreren Leuchten umfassen, die der ersten Leuchte (120) am nächsten sind, und
wobei die vordefinierte Anzahl in Abhängigkeit von einer oder mehreren Umgebungscharakteristiken in dem Raum ausgewählt wird.

12. Verfahren (200) nach Anspruch 11, wobei wenigstens eines von Folgendem zutrifft:
die vordefinierte Anzahl wird in Abhängigkeit von einem Umgebungslichtpegel in dem Raum so angepasst, dass die Anzahl von Leuchten mit abnehmendem Umgebungslichtpegel erhöht wird und die Anzahl von Leuchten mit zunehmendem Umgebungslichtpegel verringert wird;
die Anzahl von Leuchten wird in Abhängigkeit von einer Umgebungstemperatur in dem Raum so angepasst, dass die Anzahl von Leuchten mit abnehmender Umgebungstemperatur erhöht wird und die Anzahl von Leuchten mit zunehmender Umgebungstemperatur verringert wird.

13. Verfahren (200) nach einem der Ansprüche 1 bis 12, wobei die eine oder die mehreren zweiten Leuchten (120-n) andere der mehreren Leuchten umfassen, die sich innerhalb einer Schwellenentfernung von der ersten Leuchte (120-m) befinden, und
wobei die Schwellenentfernung in Abhängigkeit von einer oder mehreren Umgebungscharakteristiken in dem Raum ausgewählt wird.

14. Verfahren (200) nach Anspruch 13, wobei wenigstens eines von Folgendem zutrifft:
der Schwellenabstand wird in Abhängigkeit von einem Umgebungslichtpegel in dem Raum so angepasst, dass der Schwellenabstand mit abnehmendem Umgebungslichtpegel erhöht wird und der Schwellenabstand mit zunehmendem Umgebungslichtpegel verringert wird;
der Schwellenabstand wird in Abhängigkeit von einer Umgebungstemperatur in dem Raum so angepasst, dass der Schwellenabstand mit abnehmender Umgebungstemperatur erhöht wird und der Schwellenabstand mit zunehmender Umgebungstemperatur verringert wird.

15. Beleuchtungssystem (100), das mehrere Leuchten (120) zum Beleuchten eines Raums und eine oder mehrere Steuerentitäten (125-k, 102) zum Steuern einer jeweiligen Lichtausgabe der mehreren Leuchten (120) umfasst, wobei die mehreren Leuchten (120) eine erste Leuchte (120-m), die zum Beleuchten eines ersten Orts des Raums angeordnet ist, und eine oder mehrere zweite Leuchten (120-n), die der ersten Leuchte (120-m) zugeordnet sind und zum Beleuchten jeweiliger zweiter Orte des Raums angeordnet sind, umfassen, wobei die eine oder die mehreren Steuerentitäten (125-k, 102) zu Folgendem ausgelegt sind: Steuern der ersten Leuchte (120-m), um eine Lichtausgabe mit einer ersten Lichtintensität bereitzustellen, als Antwort auf das Detektieren einer Belegung an dem ersten Ort, wobei die erste Lichtintensität so eingestellt ist, dass sie dazu führt, dass mindestens ein erster Referenzlichtpegel an dem ersten Ort bereitgestellt wird; Steuern der einen oder der mehreren zweiten Leuchten (120-n), um ihre jeweiligen Lichtausgaben zu aktivieren, als Antwort auf das Erhalten einer Angabe, dass die erste Leuchte (120-m) ihre Lichtausgabe aktiviert hat, während keine Belegung an den jeweiligen zweiten Orten detektiert wird;
Steuern der jeweiligen zweiten Leuchte (120-n), während keine Belegung an dem jeweiligen zweiten Ort detektiert wird, um eine Lichtausgabe mit einer zweiten Lichtintensität bereitzustellen, wobei die jeweilige zweite Lichtintensität so eingestellt ist, dass sie dazu führt, dass mindestens ein zweiter Referenzlichtpegel an dem jeweiligen zweiten Ort bereitgestellt wird, wobei der zweite Referenzlichtpegel niedriger als der erste Referenzlichtpegel ist; und
Anpassen des zweiten Referenzlichtpegels für die jeweilige zweite Leuchte (120-n) in Abhängigkeit von einer oder mehreren Umgebungscharakteristiken in dem Raum,
**dadurch gekennzeichnet, dass** die eine oder die mehreren Steuerentitäten (125-k, 102) dazu ausgelegt sind, das erste Referenzlicht für die erste Leuchte (120-m) unverändert zu halten und den zweiten Referenzlichtpegel für die jeweilige zweite Leuchte (120-n) so anzupassen, dass ein Abstand zwischen dem ersten und dem zweiten Referenzlichtpegel in Abhängigkeit von der einen oder den mehreren Umgebungscharakteristiken an dem jeweiligen zweiten Ort geändert wird.

## Revendications

1. Procédé (200) de commande d'éclairage dans un système d'éclairage (100) comprenant une pluralité de luminaires (120) pour éclairer un espace, la pluralité de luminaires (120) comprenant un premier luminaire (120-m) agencé pour éclairer un premier emplacement dudit espace et un ou plusieurs seconds luminaires (120-n) associés au premier luminaire (120-m) et agencés pour éclairer des seconds emplacements respectifs dudit espace, le procédé (200) comprenant :
la commande (202) du premier luminaire (120-m) pour fournir une sortie lumineuse à une première intensité lumineuse en réponse à la détection d'occupation audit premier emplacement, la première intensité lumineuse étant réglée de sorte qu'il en résulte la fourniture d'au moins un premier niveau de lumière de référence audit premier emplacement ;
la commande (204) du ou des seconds luminaires (120-n) pour activer leurs sorties lumineuses respectives en réponse à l'obtention d'une indication du premier luminaire ayant activé sa sortie lumineuse tout en ne détectant pas d'occupation aux seconds emplacements respectifs ;
la commande (206), tout en ne détectant pas d'occupation au second emplacement respectif, du second luminaire respectif (120-n) pour fournir une sortie lumineuse à une seconde intensité de lumière respective, la seconde intensité de lumière respective étant réglée de telle sorte qu'il en résulte la fourniture d'au moins un second niveau de lumière de référence au second emplacement respectif, le second niveau de lumière de référence étant inférieur au premier niveau de lumière de référence ; et
l'ajustement (208) du second niveau de lumière de référence du second luminaire respectif en fonction d'une ou de plusieurs caractéristiques environnementales dudit espace,
**caractérisé en ce que** le procédé (200) comprend le maintien inchangé du premier niveau de lumière de référence pour le premier luminaire (120-m) et ledit ajustement (208) comprend l'ajustement du second niveau de lumière de référence pour le second luminaire respectif (120-n) de sorte qu'une marge entre le premier et le second niveau de lumière de référence est modifiée en fonction de la ou des caractéristiques environnementales au second emplacement respectif.

2. Procédé (200) selon la revendication 1,
la commande du premier luminaire (120-m) pour fournir une sortie lumineuse à la première intensité de lumière comprenant l'ajustement de la première intensité de lumière en fonction d'un niveau de lumière observé audit premier emplacement de telle sorte que la sortie lumineuse du premier luminaire (120-m) a pour résultat la fourniture d'au moins le premier niveau de lumière de référence audit premier emplacement, et
la commande du second luminaire respectif (120-n) pour fournir une sortie lumineuse à la seconde intensité lumineuse respective comprenant l'ajustement de la seconde intensité lumineuse respective en fonction d'un niveau de lumière observé au second emplacement respectif de sorte que la sortie lumineuse du second luminaire respectif (120-n) et la lumière ambiante produisent conjointement au moins le second niveau de lumière de référence au second emplacement respectif.

3. Procédé (200) selon la revendication 1 ou 2, lesdites une ou plusieurs caractéristiques environnementales respectives comprenant un ou plusieurs des éléments suivants :
un niveau de lumière ambiante au second emplacement respectif,
une température ambiante au second emplacement respectif,
un niveau sonore dans ledit espace,
un niveau d'occupation dans ledit espace.

4. Procédé (200) selon l'une quelconque des revendications 1 à 3, l'ajustement (208) du second niveau de lumière de référence pour le second luminaire respectif (120-n) comprenant l'ajustement du second niveau de lumière de référence en fonction du niveau de lumière ambiante au second emplacement respectif de telle sorte que la marge entre les premier et second niveaux de lumière de référence est augmentée lorsque le niveau de lumière ambiante augmente et que la marge est diminuée lorsque le niveau de lumière ambiante diminue.

5. Procédé (200) selon l'une quelconque des revendications 1 à 4, comprenant :
la commande du premier luminaire (120-m) pour diminuer sa sortie lumineuse pendant une première période de temps prédéfinie pour fournir un niveau de lumière de veille audit premier emplacement en réponse à la détection de la non-occupation après une période d'occupation audit premier emplacement ;
la commande du second luminaire respectif (120-n) pour diminuer sa sortie lumineuse sur une seconde période de temps prédéfinie pour fournir le niveau de lumière de veille au second emplacement respectif en réponse à l'obtention, pendant une période continue de non-occupation au second emplacement respectif, d'une indication du premier luminaire (120-m) ayant détecté une non-occupation après une période d'occupation audit premier emplacement, la seconde période de temps prédéfinie étant inférieure à la première période de temps prédéfinie ; et l'ajustement d'une durée de ladite seconde période de temps pour le second luminaire respectif (120-n) en fonction du niveau de lumière ambiante au second emplacement respectif, de sorte que ladite seconde période de temps est raccourcie lorsque le niveau de lumière ambiante augmente et que ladite seconde période de temps est prolongée lorsque le niveau de lumière ambiante diminue.

6. Procédé (200) selon l'une quelconque des revendications 1 à 3, l'ajustement (208) du second niveau de lumière de référence pour le second luminaire respectif (120-n) comprenant l'ajustement du second niveau de lumière de référence en fonction de la température ambiante au second emplacement respectif de telle sorte que la marge entre les premier et second niveaux de lumière de référence est augmentée lorsque la température ambiante augment et que la marge est diminuée lorsque la température ambiante diminue.

7. Procédé (200) selon l'une quelconque des revendications 1 à 3 ou 6, comprenant en outre :
la commande du premier luminaire (120-m) pour diminuer sa sortie lumineuse pendant une première période de temps prédéfinie pour fournir un niveau de lumière de veille audit premier emplacement en réponse à la détection de la non-occupation après une période d'occupation audit premier emplacement ;
la commande du second luminaire respectif (120-n) pour diminuer sa sortie lumineuse sur une seconde période de temps prédéfinie afin de fournir le niveau de lumière de veille au second emplacement respectif en réponse à l'obtention, pendant une période continue de non-occupation au second emplacement respectif, d'une indication du premier luminaire (120-m) ayant détecté une non-occupation après une période d'occupation audit premier emplacement, la seconde période de temps prédéfinie étant inférieure à la première période de temps prédéfinie ; et
l'ajustement d'une durée de ladite seconde période de temps pour le second luminaire respectif (120-n) en fonction de la température ambiante au second emplacement respectif de sorte que ladite seconde période de temps est raccourcie lorsque la température ambiante augment et que ladite période de temps est prolongée lorsque la température ambiante diminue.

8. Procédé (200) selon l'une quelconque des revendications 1 à 3, l'ajustement (208) du second niveau de lumière de référence pour le second luminaire respectif (120-n) comprenant
l'obtention d'une pluralité de courbes d'ajustement du niveau de lumière prédéfinies, où chaque courbe d'ajustement du niveau de lumière définit une marge respective entre le premier niveau de lumière de référence et le second niveau de lumière de référence en fonction du niveau de lumière ambiante et est affectée à une température ambiante respective ;
la sélection de l'une des courbes d'ajustement du niveau de lumière pour le second luminaire respectif (120-n) en fonction de la température ambiante au second emplacement respectif ; et
l'ajustement du second niveau de lumière de référence de sorte que la marge entre le premier et le second niveau de lumière de référence est réglée en fonction de la courbe d'ajustement de niveau de lumière sélectionnée en fonction du niveau de lumière ambiante au second emplacement respectif.

9. Procédé (200) selon l'une quelconque des revendications 1 à 3 ou 8, comprenant en outre :
la commande du premier luminaire (120-m) pour diminuer sa sortie lumineuse pendant une première période de temps prédéfinie pour fournir un niveau de lumière de veille audit premier emplacement en réponse à la détection de la non-occupation après une période d'occupation audit premier emplacement ;
la commande du second luminaire respectif (120-n) pour diminuer sa sortie lumineuse pendant une seconde période de temps prédéfinie pour fournir le niveau de lumière de veille au second emplacement respectif en réponse à l'obtention, pendant une période continue de non-occupation au second emplacement respectif, d'une indication du premier luminaire (120-m) ayant initié la désactivation de sa sortie lumineuse ;
l'obtention d'une pluralité de courbes d'ajustement de période de gradation prédéfinies, chaque courbe d'ajustement de période de gradation définissant un changement respectif de durée de ladite seconde période de temps en fonction du niveau de lumière ambiante et à laquelle est affectée une température ambiante respective ;
la sélection de l'une des courbes d'ajustement de la période de gradation pour le second luminaire respectif (120-n) en fonction de la température ambiante au second emplacement respectif ; et
l'ajustement d'une durée de ladite seconde période de temps pour le second luminaire respectif (120-n) en fonction de la courbe d'ajustement de la période de gradation sélectionnée en fonction du niveau de lumière ambiante au second emplacement respectif.

10. Procédé (200) selon l'une quelconque des revendications 1 à 9, le nombre desdits un ou plusieurs seconds luminaires (120-n) qui sont associés au premier luminaire (120-m) étant adapté sur la base de la ou des caractéristiques environnementales dans ledit espace.

11. Procédé (200) selon l'une quelconque des revendications 1 à 10,
lesdits un ou plusieurs seconds luminaires (120-n) comprenant un nombre prédéfini d'autres luminaires parmi la pluralité de luminaires les plus proches du premier luminaire (120), et
ledit nombre prédéfini étant choisi en fonction d'une ou plusieurs caractéristiques environnementales dans ledit espace.

12. Procédé (200) selon la revendication 11, au moins l'une des situations suivantes s'appliquant :
ledit nombre prédéfini étant ajusté en fonction d'un niveau de lumière ambiante dans ledit espace de sorte que ledit nombre de luminaires est accru lorsque le niveau de lumière ambiante diminue et que ledit nombre de luminaires est diminué lorsque le niveau de lumière ambiante augmente ;
ledit nombre de luminaires étant ajusté en fonction d'une température ambiante dans ledit espace, de sorte que ledit nombre de luminaires augmente lorsque la température ambiante diminue et que ledit nombre de luminaires diminue lorsque la température ambiante augmente.

13. Procédé (200) selon l'une quelconque des revendications 1 à 12,
lesdits un ou plusieurs seconds luminaires (120-n) comprenant d'autres luminaires de la pluralité de luminaires situés à une distance seuil du premier luminaire (120-m), et
ladite distance seuil étant choisie en fonction d'une ou plusieurs caractéristiques environnementales dans ledit espace.

14. Procédé (200) selon la revendication 13, au moins l'une des situations suivantes s'appliquant :
ladite distance seuil étant ajustée en fonction d'un niveau de lumière ambiante dans ledit espace de telle sorte que ladite distance seuil est augmentée lorsque le niveau de lumière ambiante diminue et ladite distance seuil est diminuée lorsque le niveau de lumière ambiante augmente ;
ladite distance seuil étant ajustée en fonction d'une température ambiante dans ledit espace de telle sorte que ladite distance seuil est augmentée lorsque la température ambiante diminue et ladite distance seuil est diminuée lorsque la température ambiante augmente.

15. Système d'éclairage (100) comprenant une pluralité de luminaires (120) pour éclairer un espace et une ou plusieurs entités de commande (125-k, 102) pour commander la sortie lumineuse respective de ladite pluralité de luminaires (120), la pluralité de luminaires (120) comprenant un premier luminaire (120-m) agencé pour éclairer un premier emplacement dudit espace et un ou plusieurs seconds luminaires (120-n) associés au premier luminaire (120-m) et agencés pour éclairer des seconds emplacements respectifs dudit espace, la ou les entités de commande (125-k, 102) étant agencées pour :
commander le premier luminaire (120-m) pour fournir une sortie lumineuse à une première intensité lumineuse en réponse à la détection d'occupation audit premier emplacement, la première intensité lumineuse étant réglée de sorte qu'il en résulte la fourniture d'au moins un premier niveau de lumière de référence audit premier emplacement ;
commander le ou les seconds luminaires (120-n) pour activer leurs sorties lumineuses respectives en réponse à l'obtention d'une indication du premier luminaire (120-m) ayant activé sa sortie lumineuse tout en ne détectant pas d'occupation aux seconds emplacements respectifs ;
commander, tout en ne détectant pas d'occupation au second emplacement respectif, le second luminaire respectif (120-n) pour fournir une sortie lumineuse à une seconde intensité lumineuse, la seconde intensité lumineuse respective étant réglée de telle sorte qu'il en résulte la fourniture d'au moins un second niveau de lumière de référence au second emplacement respectif, le second niveau de lumière de référence étant inférieur au premier niveau de lumière de référence ; et
ajuster le second niveau de lumière de référence du second luminaire respectif (120-n) en fonction d'une ou de plusieurs caractéristiques environnementales dudit espace,
**caractérisé en ce que** la ou les entités de commande (125-k, 102) sont agencées pour maintenir inchangé le premier niveau de lumière de référence pour le premier luminaire (120-m) et ajuster le second niveau de lumière de référence pour le second luminaire respectif (120-n) de sorte qu'une marge entre les premier et second niveaux de lumière de référence est modifiée en fonction de la ou des caractéristiques environnementales au second emplacement respectif.
